# EUROPÄISCHE PATENTSCHRIFT

(11) **EP 0 427 112 B1**
(45) Veröffentlichungstag und Bekanntmachung des Hinweises auf die Patenterteilung: **02.02.1994**
(21) Anmeldenummer: 90120933.8
(22) Anmeldetag: 31.10.1990
(51) Int. Cl.: F17C 9/02, F24F 12/00, F25D 17/02

(54) **Verfahren und Vorrichtung zur Erzeugung der gasförmigen Phase aus einem in seiner flüssigen Phase gelagerten Gasvorrat**
Process and apparatus for producing the gaseous phase of a gas volume stored in its liquid phase
Procédé et dispositif de production de la phase gazeuse d'un volume de liquide stocké dans la phase liquide

(30) Priorität: 06.11.1989 DE 3936940
(43) Veröffentlichungstag der Anmeldung: 15.05.1991
(73) Patentinhaber: WESTFALEN AG, D-48155 Münster (DE)
(72) Erfinder: Ablass, Karl, W-4280 Borken (DE); Jakobi, Ulrich, Dipl.-Chem., W-4402 Greven-Reckenfeld (DE)
(74) Vertreter: Patentanwälte Leinweber & Zimmermann

(56) Entgegenhaltungen:
- DE-A- 2 813 509
- DE-A- 3 818 121
- FR-A- 1 599 608
- FR-A- 2 582 785

## Beschreibung

Die Erfindung bezieht sich auf ein Verfahren zur Erzeugung der gasförmigen Phase aus einem in seiner flüssigen Phase gelagerten Gasvorrat in einer gewünschten Strommenge, bei dem ein dem gewünschten Gasstrom entsprechender Flüssiggasstrom einem mit der Umgebungsluft in Wärmeaustausch stehenden Verdampfer zugeführt wird, sowie auf eine Vorrichtung zur Durchführung dieses Verfahrens.

Bei einem derartigen bekannten Verfahren wird die Umwandlung von der flüssigen Phase in die gasförmige Phase ausschließlich in dem Verdampfer ausgeführt, der in seiner Größe derart zu dimensionieren ist, daß innerhalb der Schwankungsbreite der Umgebungsbedingungen eine für den Maximalwert der gewünschten Strommenge ausreichende Verdampfungsleistung erzielt wird. Der gesamte Kälteinhalt der flüssigen Phase wird dabei durch den beispielsweise im Freien aufgestellten Verdampfer an die Umgebungsluft abgegeben, wodurch die diesem Kälteinhalt entsprechende Energiemenge ungenutzt verlorengeht.

Der Erfindung liegt daher die Aufgabe zugrunde, bei einem Verfahren der eingangs genannten Art die bei der Verdampfung des Flüssiggases freiwerdende Kälteenergie nutzbar zu machen, und eine Vorrichtung zur Durchführung dieses Verfahrens anzugeben.

Erfindungsgemäß wird diese Aufgabe hinsichtlich des Verfahrens dadurch gelöst, daß ein Anteil des dem Verdampfer zugeführten Flüssiggasstroms über ein einen Phasenübergang mit einer bei oder oberhalb der Verdampfungstemperatur des Flüssiggases liegenden Umwandlungstemperatur aufweisendes Puffermedium mit einem Anteil eines Wärmeträgermediums aus einem Abwärme liefernden Prozeß in Wärmeaustausch gebracht wird und die Temperatur des Puffermediums durch Regelung der dem Puffermedium zugeführten Anteile des Flüssiggasstromes und des Wärmeträgermediums auf der Umwandlungstemperatur gehalten wird.

Die Erfindung trägt dem Umstand Rechnung, daß in Produktionsstätten, in denen ein Bedarf an technischen Gasen, wie Stickstoff, Sauerstoff oder Argon, besteht, die aus einem in seiner flüssigen Phase gelagerten Gasvorrat entnommen werden, regelmäßig auch Abwärme liefernde Prozesse ablaufen. Das aus diesen Prozessen herrührende, mit der Abwärme beladene Wärmeträgermedium, beispielsweise die Abluft einer Klimaanlage oder eine Kühlsole, bedürfen dabei eines Wärmeentzugs, der mit einem erheblichen Energieaufwand verbunden ist. Durch die Erfindung wird die bei der Überführung des Gasvorrates von seiner flüssigen Phase in die gasförmige Phase anfallende Abfallkälte für den die Abwärme liefernden Prozeß nutzbar gemacht, so daß eine erhebliche Energieeinsparung erzielt werden kann.

Allerdings besteht zwischen dem in seiner flüssigen Phase tiefkalten Gasvorrat und dem Temperaturniveau des die Abwärme liefernden Prozesses regelmäßig ein sehr großer Temperaturunterschied. Auch ist die benötigte Strommenge der gasförmige Phase oft Bedarfsschwankungen unterworfen, so daß auch die Menge der anfallenden Abfallkälte schwankt. Die hierdurch hervorgerufenen Schwierigkeiten der Steuerung des Wärmeaustauschs zwischen dem zu verdampfenden Flüssiggasstrom und dem mit der Abwärme beladenen Wärmeträgermedium werden durch die Zwischenschaltung des Puffermediums wirksam beseitigt, weil dort der Wärmeaustausch bei dem durch die Umwandlungstemperatur des Phasenübergangs festgelegten Temperaturniveau erfolgt. Wegen der mit dem Phasenübergang des Puffermediums verbundenen Umwandlungswärme besteht eine große Pufferkapazität, so daß das Temperaturniveau in wohldefinierter und stabiler Weise auch bei starken Schwankungen in der Strommenge des verdampften Flüssiggasstromes oder im Abwärmeanfall des die Abwärme liefernden Prozesses eingehalten werden kann. Sofern jedoch die Kälteaufnahmefähigkeit des Puffermediums mangels ausreichender Abwärmezufuhr überschritten würde, wird der mit dem Puffermedium in Wärmeaustausch tretende Anteil des Flüssiggasstroms herabgesetzt, wobei die Herabsetzung bis auf den Wert Null erfolgen kann, und der der gewünschten Strommenge der gasförmigen Phase entsprechende Flüssiggasstrom zu einem entsprechenden Anteil oder vollständig in dem Verdampfer in die gasförmige Phase umgewandelt, so daß für den Verbraucher der gasförmigen Phase jedenfalls die Bereitstellung der gewünschten Strommenge sichergestellt ist.

Es sind zahlreiche Substanzen bekannt, die Phasenübergänge mit Umwandlungstemperaturen in der Größenordnung der Raumtemperatur bis hin zu sehr tiefen Temperaturen aufweisen. Somit ist es möglich, das für die jeweils gewünschte Kühltemperatur des Wärmeträgermediums aus dem die Abwärme liefernden Prozeß geeignete Puffermedium auszuwählen.

Eine zweckmäßige Ausführungsform des erfindungsgemäßen Verfahrens besteht darin, daß die Umwandlungstemperatur des Puffermediums im Bereich der Raumtemperatur liegt. Diese Auswahl ist für solche Anwendungen besonders geeignet, bei denen das die Abwärme führende Wärmeträgermedium etwa auf Raumtemperatur abgekühlt werden soll. Gleichzeitig wird hierdurch die vom Verbraucher benötigte gasförmige Phase auf Raumtemperatur angewärmt geliefert.

Eine zweckmäßige Anwendungsform des erfindungsgemäßen Verfahrens besteht darin, daß als Wärmeträgermedium die Abluft einer Klimaanlage dient. Hierbei kann also die bei der Erzeugung der gasförmigen Phase anfallende Abfallkälte zu Klimatisierungszwecken nutzbar gemacht und der für die Klimaanlage erforderliche Energiebedarf gesenkt werden.

Ähnlich läßt sich das erfindungsgemäße Verfahren zur Senkung des Energiebedarfs bei kühlbedürftigten Herstellungs- und Verarbeitungsvorgängen einsetzen, indem als Wärmeträgermedium ein abwärmebeladenes flüssiges Kühlmittel dient.

Das erfindungsgemäße Verfahren gewährleistet einerseits die Lieferung der gewünschten Strommenge der gasförmigen Phase mit der gewünschten Temperatur. Andererseits ist jedoch durch die erfindungsgemäße Regelung auch die Kühlung des mit der Abwärme beladenen Wärmeträgermediums auf eine vorgegebene Temperatur erreicht. Um auch bei einer Überschreitung der durch den verdampfenden Flüssiggasstrom zur Verfügung gestellten Kühlkapazität die gewünschte Kühltemperatur des Wärmeträgermediums aufrechterhalten zu können, ist vorteilhaft vorgesehen, daß der nicht dem Puffermedium zugeleitete andere Anteil des Wärmeträgermediums einem Kühlkreislauf zugeführt wird.

Eine Vorrichtung zur Durchführung des erfindungsgemäßen Verfahrens mit einem Lagertank für einen Gasvorrat in seiner flüssigen Phase, einer die Eingangsseite eines mit der Umgebungsluft in Wärmeaustausch stehenden Verdampfers mit dem Lagertank verbindenden Flüssiggasleitung und einem an der Ausgangsseite des Verdampfers angeordneten Auslaß für die gasförmige Phase in einer gewünschten Strommenge zeichnet sich erfindungsgemäß dadurch aus, daß im Nebenschluß zu der Flüssiggasleitung über eine erste Regelventilanordnung ein erster Kreislauf eines Wärmetauschers angeschlossen ist, dessen über ein einen Phasenübergang mit einer bei oder oberhalb der Verdampfungstemperatur des Flüssiggases liegenden Umwandlungstemperatur aufweisendes Puffermedium mit dem ersten Kreislauf in Wärmeaustausch stehender zweiter Kreislauf über eine zweite Regelventilanordnung an einen Kreislauf eines Wärmeträgermediums eines Abwärme liefernden Prozesses angeschlossen ist, und daß eine die erste und die zweite Regelventilanordnung steuernde Regeleinrichtung vorgesehen ist, durch die die Temperatur des Puffermediums auf seine Umwandlungstemperatur eingeregelt wird.

Durch die erste Regelventilanordnung kann von der zum Verdampfer führenden Flüssiggasleitung gerade ein derart bemessener Anteil des Flüssiggasstroms abgezweigt werden, daß sein Kälteinhalt in dem Wärmetauscher von dem Wärmeträgermedium abgeführt werden kann, das dadurch auf eine gewünschte Temperatur abgekühlt wird. Sofern der Wärmetauscher trotz seiner Pufferwirkung keine Abfallkälte mehr aufnehmen kann und die Temperatur des Puffermediums unter seine Umwandlungstemperatur absinken würde, schaltet die durch die Regeleinrichtung gesteuerte erste Regelventilanordnung den Nebenschluß ab und führt den Flüssiggasstrom im Hauptschluß durch die Flüssiggasleitung dem Verdampfer zu. Andererseits kann der entgegengesetzte Fall auftreten, daß die in dem Flüssiggasstrom enthaltene Abfallkälte zur Kühlung des Wärmeträgermediums auf die gewünschte Temperatur nicht ausreichend ist. Für diesen Fall wird durch die von der Regeleinrichtung gesteuerte zweite Regelventilanordnung nur ein entsprechender Anteil des Wärmeträgermediums in den Wärmetauscher eingeleitet. Da die Regelung der Temperatur des Puffermediums auf seine Umwandlungstemperatur erfolgt, läßt sich dieser Regelzustand wegen der mit dem Phasenübergang verbundenen Änderungen in den physikalischen Werten des Puffermediums leicht überwachen, so daß die notwendigen Eingangsgrößen für die Regeleinrichtung leicht gebildet werden können.

In einer zweckmäßigen Ausführungsform der erfindungsgemäßen Vorrichtung ist vorgesehen, daß die zweite Regelventilanordnung Anschlüsse für einen Kälteerzeugerkreislauf aufweist, in den der nicht in den Wärmetauscher eingeleitete andere Anteil des Wärmeträgermediums eingespeist wird. Für den Fall, daß die Abfallkälte des Flüssiggases für eine erwünschte Abkühlung des die Abwärme führenden Wärmeträgermediums nicht ausreicht, tritt somit der zusätzlich vorgesehene Kälteerzeugerkreislauf in Tätigkeit, so daß unabhängig von dem jeweiligen Verbrauch an gasförmiger Phase die gewünschte Kühlung des gesamten Wärmeträgermediums sichergestellt ist.

Ein bevorzugter Aufbau besteht darin, daß der Wärmetauscher ein den einen Kreislauf führendes Rohr und einen das Rohr in einem radialen Abstand umschließenden, an seiner radial äußeren Seite von dem anderen Kreislauf bestrichenen Außenmantel aufweist, wobei der zwischen dem Rohr und dem Außenmantel begrenzte Raum von dem Puffermedium ausgefüllt ist. Hierdurch ist bei einem einfachen Aufbau ein großflächiger Wärmeaustauschkontakt des ersten und des zweiten Kreislaufs mit dem Puffermedium sichergestellt. Das Puffermedium verharrt dabei in Ruhe, was insbesondere dann von Wichtigkeit ist, wenn sein Phasenübergang zwischen der flüssigen und der festen Phase stattfindet.

Weitere Merkmale, Einzelheiten und Vorteile der Erfindung ergeben sich aus der folgenden Beschreibung und der Zeichnung, auf die bezüglich einer erfindungswesentlichen Offenbarung aller im Text nicht erwähnten Einzelheiten ausdrücklich hingewiesen wird. Es zeigen:
- Fig. 1: eine schematische Gesamtansicht einer Vorrichtung zur Erzeugung der gasförmigen Phase aus einem in seiner flüssigen Phase gelagerten Gasvorrat, und
- Fig. 2: eine Teilansicht eines in der Vorrichtung von Fig. 1 verwendeten Wärmetauschers.

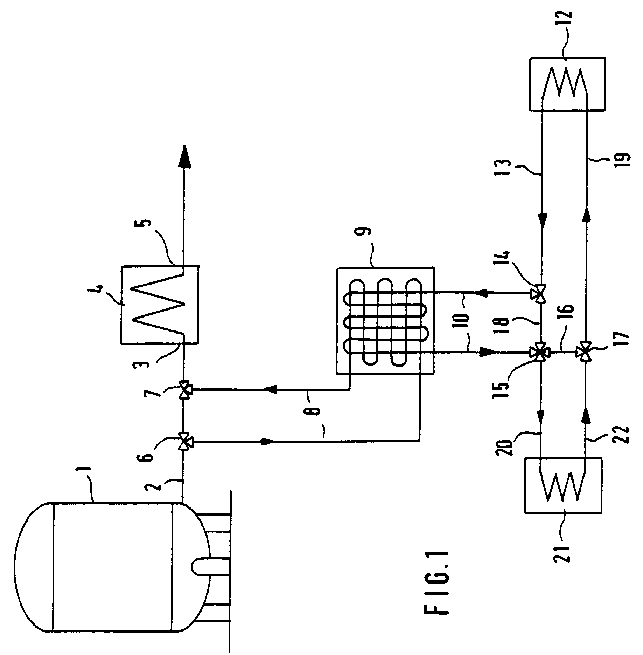

Wie aus Fig. 1 hervorgeht, weist eine dort dargestellte Vorrichtung einen Lagertank 1 für einen Vorrat eines tiefkalten Gases in seiner flüssigen Phase auf. Beispielsweise handelt es sich bei dem Flüssiggas um Flüssigstickstoff, Flüssigsauerstoff oder Flüssigargon. Der Lagertank 1 ist durch eine Flüssiggasleitung 2 mit der Eingangsseite 3 eines Verdampfers 4 verbunden, an dessen Ausgangsseite 5 ein nicht näher dargestellter Auslaß zur Entnahme einer gewünschten Strommenge der gasförmigen Phase des in dem Lagertank 1 gespeicherten Gasvorrates vorgesehen ist. Der Lagertank 1 und der Verdampfer 4 sind im Freien aufgestellt, wodurch letzterer mit der Umgebungsluft in Wärmeaustausch steht.

In die Flüssiggasleitung 2 ist eine erste Regelventilanordnung aus zwei hintereinandergeschalteten Regelventilen 6,7 eingesetzt, von denen das dem Lagertank 1 näher gelegene Regelventil 6 der Abzweigung eines Nebenstroms des von dem Lagertank 1 zum Verdampfer 4 fließenden Flüssiggasstroms und das näher beim Verdampfer 4 liegende Regelventil 7 zur Zurückführung des Nebenstroms in die zum Verdampfer 4 führende Flüssiggasleitung 2 dient.

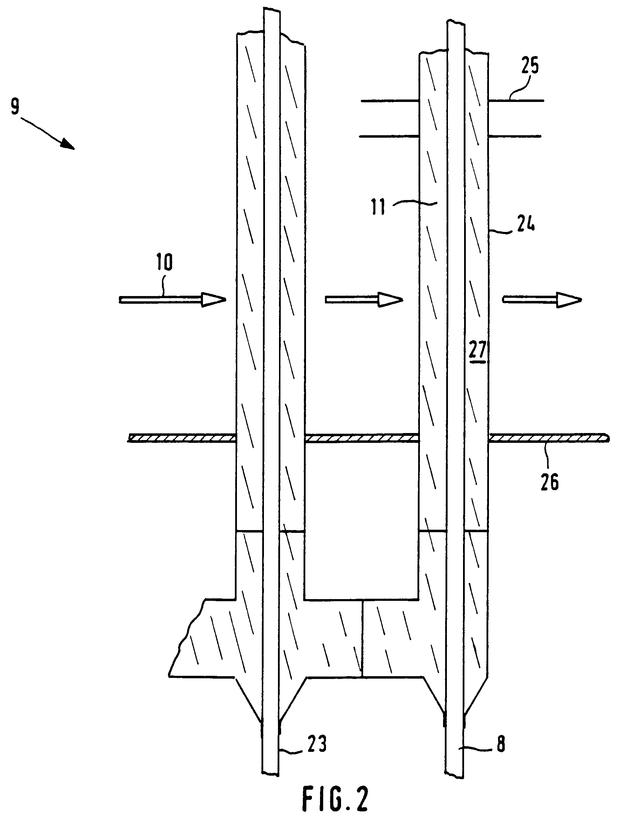

Der von der ersten Regelventilanordnung abgezweigte Nebenstrom ist an einen ersten Kreislauf 8 eines Wärmetauschers 9 angeschlossen, dessen zweiter Kreislauf 10 über ein in dem Wärmetauscher 9 vorgesehenes Puffermedium (Fig. 2, Bezugszeichen 11) mit dem ersten Kreislauf 8 in Wärmekontakt steht. Dem zweiten Kreislauf 10 wird über eine zweite Regelventilanordnung ein Wärmeträgermedium aus einem Abwärme liefernden Prozeß zugeführt.

Im einzelnen gelangt das aus einem in Fig. 1 unter dem Bezugszeichen 12 symbolisch dargestellten Abwärmeerzeuger austretende Wärmeträgermedium über eine Vorlaufleitung 13 zu einem Eingangsanschluß eines Regelventils 14 der zweiten Regelventilanordnung, von dessen einem Ausgangsanschluß das Wärmeträgermedium in den zweiten Kreislauf 10 hineinverzweigt wird. Der Ausgang des zweiten Kreislaufes 10 ist an einen ersten Eingang eines weiteren Regelventils 15 der zweiten Regelventilanordnung angeschlossen, wobei dieser erste Eingang des weiteren Regelventils 15 in einer entsprechenden Regelstellung mit einem ersten Ausgang in Verbindung steht, welcher über eine Leitung 16 mit einem ersten Eingang eines anderen Regelventils 17 der zweiten Regelventilanordnung verbunden ist. Der andere Ausgang des Regelventils 14 steht über eine Leitung 18 mit einem zweiten Eingang des weiteren Regelventils 15 in Verbindung, während ein Ausgang des anderen Regelventils 17 über eine Rücklaufleitung 19 zum Abwärmeerzeuger 12 zurückgeführt ist.

Ein zweiter Ausgang des weiteren Regelventils 15, der in einer entsprechenden Regelstellung mit dessen zweitem Ein gang in Verbindung gelangt, ist über eine Vorlaufleitung 20 an die Eingangsseite eines in Fig. 1 unter dem Bezugszeichen 21 symbolisch dargestellten Kälteerzeugers angeschlossen. Der Ausgang des Kälteerzeugers 21 ist mittels einer Rücklaufleitung 22 an einen zweiten Eingang des anderen Regelventils 17 zurückgeführt, wobei dieser zweite Eingang in einer geeigneten Regelstellung mit dem Ausgang des anderen Regelventils 17 in Verbindung gelangt.

Bei dem in Fig. 2 dargestellten Ausführungsbeispiel des Wärmetauschers 9 ist der erste Kreislauf 8 in einem Rohr 23 geführt, das in einem radialen Abstand von einem Außenmantel 24 umgeben ist, von dessen Außenseite aus sich Kühlfahnen 25 erstrecken. Der zweite Kreislauf 10 verläuft innerhalb eines von einer Wandung 26 umschlossenen Bereichs des Wärmetauschers 9 und bestreicht dabei die innerhalb der Wandung 26 angeordneten Bereiche des Außenmantels 24. Der zwischen dem Rohr 23 und dem Außenmantel 24 begrenzte Raum 27 ist von dem Puffermedium 11 ausgefüllt.

Das Puffermedium 11 weist einen Phasenübergang auf, dessen Übergangstemperatur mindestens bei, vorzugsweise aber oberhalb der Verdampfungstemperatur des Flüssiggases liegt. Eine in der Zeichnung nicht näher dargestellte Regeleinrichtung erfaßt den Temperaturverlauf des Puffermediums 11 im Bereich seiner Umwandlungstemperatur in Abhängigkeit von dem an einem Phasenübergang herrschenden charakteristischen Druck- oder Temperaturverlauf des Puffermediums 11 und steuert die erste und zweite Regelventilanordnung derart, daß unabhängig von der pro Zeiteinheit aus dem Verdampfer 5 entnommenen Menge an Gas die Temperatur des Puffermediums 11 einerseits nicht unter seine Umwandlungstemperatur absinkt und andererseits das von dem Abwärmeerzeuger 12 zufließende Wärmeträgermedium seine durch die Temperatur des Puffermediums bestimmte, gewünschte Abkühlungstemperatur nicht überschreitet.

Im einzelnen arbeitet die Vorrichtung derart, daß ein einer gewünschten, an der Ausgangsseite 5 einstellbaren Strommenge der gasförmigen Phase entsprechender Flüssiggasstrom aus dem Lagertank 1 in die Flüssiggasleitung 2 einfließt. Die Regeleinrichtung stellt die beiden Regelventile 6,7 der ersten Regelventilanordnung derart ein, daß die in den ersten Kreislauf 8 abgezweigte Strommenge in dem Wärmetauscher 9 nicht zu einer Unterschreitung der Umwandlungstemperatur des Puffermediums 11 führt. Dabei wird der in den ersten Kreislauf 8 abgezweigte Strom des Flüssiggases in dem Wärmetauscher 9 durch Wärmeabgabe an den zweiten Kreislauf 10 in seine gasförmige Phase überführt, während der nicht abgezweigte Reststrom, der auch Null sein kann, die Regelventile 6 und 7 durchfließt und in dem Verdampfer 4 in die gasförmige Phase umgewandelt wird. Damit steht unter allen Umständen an der Ausgangsseite 5 die gasförmige Phase in der gewünschten Strommenge zur Verfügung.

Andererseits wird durch die Regeleinrichtung auch eine Einstellung der zweiten Regelventilanordnung vorgenommen. Solange die von dem zweiten Kreislauf 10 in dem Wärmetauscher 9 auf den ersten Kreislauf 8 übergebene Wärmemenge zur Kühlung des gesamten zugeführten Wärmeträgermediums ausreicht, wird das durch die Vorlaufleitung 13 fließende Wärmeträgermedium in dem Regelventil 14 von dessen Eingang zu dessen einem Ausgang durchgelassen und fließt somit durch den zweiten Kreislauf 10 zurück zum weiteren Regelventil 15, das wegen seiner durch die Regeleinrichtung bewirkten Einstellung das ankommende Wärmeträgermedium von seinem ersten Eingang zu seinem ersten Ausgang durchläßt und über die Leitung 16 zum ersten Eingang des anderen Regelventils 17 führt, der in diesem Regelzustand zum Ausgang durchgeschaltet ist und daher das Wärmeträgermedium über die Rücklaufleitung 19 zum Abwärmeerzeuger 12 zurückleitet.

Wenn jedoch die von dem Wärmeträgermedium zugeführte Abwärmemenge zu groß ist, um bei der Umwandlungstemperatur des Puffermediums 11 in dem Wärmetauscher 9 abgeführt zu werden, öffnet die Regeleinrichtung einen Kreislaufzweig für das Wärmeträgermedium vom anderen Ausgang des Regelventils 14 durch die Leitung 18 zum zweiten Eingang des weiteren Regelventils 15 und durch dieses hindurch zu dessen zweitem Ausgang, so daß ein entsprechender Anteil des Wärmeträgermediums über die Vorlaufleitung 20 in den Kälteerzeuger 21 gelangt. Durch eine entsprechende Einstellung des anderen Regelventils 17 gelangt der auf der Rücklaufleitung 22 ankommende, gekühlte Anteil des Wärmeträgermediums vom zweiten Eingang des anderen Regelventils 17 zu dessen Ausgang und wird dadurch in die Rücklaufleitung 19 zum Abwärmeerzeuger 12 eingespeist.

Somit ist als Ergebnis des gesamten Regelvorganges einerseits die Erzeugung der gasförmigen Phase in der gewünschten Menge und Temperatur sichergestellt und andererseits die Kühlung des mit der Abwärme beladenen Wärmeträgermediums auf die gewünschte Temperatur gewährleistet.

## Patentansprüche

1. Verfahren zur Erzeugung der gasförmigen Phase aus einem in seiner flüssigen Phase gelagerten Gasvorrat (1) in einer gewünschten Strommenge (2), bei dem ein dem gewünschten Gasstrom entsprechender Flüssiggasstrom einem mit der Umgebungsluft in Wärmeaustausch stehenden Verdampfer (4) zugeführt wird, dadurch **gekennzeichnet**, daß ein Anteil (8) des dem Verdampfer zugeführten Flüssiggasstroms über ein einen Phasenübergang mit einer bei oder oberhalb der Verdampfungstemperatur des Flüssiggases liegenden Umwandlungstemperatur aufweisendes Puffermedium (9) mit einem Anteil (10) eines Wärmeträgermediums aus einem Abwärme liefernden Prozeß (12) in Wärmeaustausch gebracht wird und die Temperatur des Puffermediums (9) durch Regelung der dem Puffermedium zugeführten Anteile des Flüssiggasstromes (8) und des Wärmeträgermediums (10) auf der Umwandlungstemperatur gehalten wird.

2. Verfahren nach Anspruch 1, dadurch **gekennzeichnet**, daß die Umwandlungstemperatur des Puffermediums (9) im Bereich der Raumtemperatur liegt.

3. Verfahren nach Anspruch 1 oder 2, dadurch **gekennzeichnet**, daß als Wärmeträgermedium die Abluft einer Klimaanlage dient.

4. Verfahren nach Anspruch 1 oder 2, dadurch **gekennzeichnet**, daß als Wärmeträgermedium ein abwärmebeladenes flüssiges Kühlmittel dient.

5. Verfahren nach einem der Ansprüche 1 bis 4, dadurch **gekennzeichnet**, daß der nicht dem Puffermedium zugeleitete andere Anteil des Wärmeträgermediums einem Kühlkreislauf (20, 22) zugeführt wird.

6. Vorrichtung zur Durchführung des Verfahrens nach einem der Ansprüche 1 bis 5, mit einem Lagertank (1) für einen Gasvorrat in seiner flüssigen Phase, einer die Eingangsseite (3) eines mit der Umgebungsluft in Wärmeaustausch stehenden Verdampfers (4) mit dem Lagertank verbindenden Flüssiggasleitung (2) und einem an der Ausgangsseite (5) des Verdampfers angeordneten Auslaß für die gasförmige Phase in einer gewünschten Strommenge, dadurch **gekennzeichnet**, daß im Nebenschluß zu der Flüssiggasleitung (2) über eine erste Regelventilanordnung (6,7) ein erster Kreislauf (8) eines Wärmetauschers angeschlossen ist, dessen über ein einen Phasenübergang mit einer bei oder oberhalb der Verdampfungstemperatur des Flüssiggases liegenden Umwandlungstemperatur aufweisendes Puffermedium (11) mit dem ersten Kreislauf (8) in Wärmeaustausch stehender zweiter Kreislauf (10) über eine zweite Regelventilanordnung (14,15, 17) an einen Kreislauf (13,19) eines Wärmeträgermediums eines Abwärme liefernden Prozesses (12) angeschlossen ist, und daß eine die erste und die zweite Regelventilanordnung (6,7; 14,15, 17) steuernde Regeleinrichtung vorgesehen ist, durch die die Temperatur des Puffermediums (11) auf seine Umwandlungstemperatur eingeregelt wird.

7. Vorrichtung nach Anspruch 6, dadurch **gekennzeichnet**, daß die zweite Regelventilanordnung (14,15,17) Anschlüsse für einen Kälteerzeugerkreislauf (20,22) aufweist, in den der nicht in den Wärmetauscher (9) eingeleitete andere Anteil des Wärmeträgermediums eingespeist wird.

8. Vorrichtung nach Anspruch 6 oder 7, dadurch **gekennzeichnet**, daß der Wärmetauscher (9) ein den einen Kreislauf führendes Rohr (23) und einen das Rohr in einem radialen Abstand umschließenden, an seiner radial äußeren Seite von dem anderen Kreislauf bestrichenen Außenmantel (24) aufweist, wobei der zwischen dem Rohr (23) und dem Außenmantel (24) begrenzte Raum von dem Puffermedium (11) ausgefüllt ist.

## Claims

1. A process for producing the gaseous phase at a desired quantity of flow (2) from a gas supply (1) stored in its liquid phase, in which a stream of liquefied gas corresponding to the desired gas stream is fed to an evaporator (4) which exchanges heat with the ambient air, characterised in that a portion (8) of the stream of liquefied gas fed to the evaporator is brought into heat exchange with a portion (10) of a heat transfer medium from a process (12) providing waste heat via a buffer medium (9) having a phase transition with a transition temperature at or above the evaporation temperature of the liquefied gas, and the temperature of the buffer medium (9) is maintained at the transition temperature by controlling the portions of the liquefied gas stream (8) and of the heat transfer medium (10) fed to the buffer medium.

2. A process according to claim 1, characterised in that the transition temperature of the buffer medium (9) is in the region of room temperature.

3. A process according to claim 1 or 2, characterised in that the off-gas from an air-conditioning unit serves as the heat transfer medium.

4. A process according to claim 1 or 2, characterised in that a liquid coolant laden with waste heat serves as the heat transfer medium.

5. A process according to any one of claims 1 to 4, characterised in that the other portion of the heat transfer medium which is not fed to the buffer medium is fed to a cooling circuit (20, 22).

6. An apparatus for carrying out the process according to any one of claims 1 to 5, with a storage tank (1) for a gas supply in its liquid phase, a liquefied gas line (2) connecting the inlet side (3) of an evaporator (4) exchanging heat with the ambient air to the storage tank and a discharge for the gaseous phase at a desired quantity of flow disposed on the outlet side (5) of the evaporator, characterised in that a first circuit (8) of a heat exchanger is connected across the liquefied gas line (2) via a first control valve arrangement (6,7), the buffer medium (11) of which circuit, which has a phase transition with a transition temperature at or above the evaporation temperature of the liquefied gas, is connected by means of a second circuit (10) exchanging heat with the first circuit (8) and via a second control valve arrangement (14, 15, 17) to a circuit (13, 19) of a heat transfer medium of a process (12) supplying waste heat, and that a controller is provided, which controls the first and the second control valve arrangements (6,7; 14, 15, 17) and by means of which the temperature of the buffer medium (11) is adjusted to its transition temperature.

7. An apparatus according to claim 6, characterised in that the second control valve arrangement (14, 15, 17) has connections for a cold production circuit (20, 22) into which the other portion of the heat transfer medium, which is not fed to the heat exchanger (9), is fed.

8. An apparatus according to claim 6 or 7, characterised in that the heat exchanger (9) has a tube (23) leading to one circuit and an outer shell (24) which surrounds the tube at a radial distance and the external radial face of which is swept by the other circuit, wherein the space which is bounded between the pipe (23) and the outer shell (24) is filled by the buffer medium (11).

## Revendications

1. Procédé pour la production de la phase gazeuse d'un volume de gaz (1) stocké en phase liquide en une quantité souhaitée (2),dans lequel un courant de gaz liquide correspondant au courant gazeux souhaité est conduit à un évaporateur (4) se trouvant en échange de chaleur avec l'air environnant, caractérisé en ce qu'une partie (8) du courant de gaz liquide conduit à l'évaporateur est mise en échange de chaleur avec une partie (10) d'un fluide de transfert de chaleur provenant d'un procédé (12) livrant de la chaleur perdue par un agent tampon (9) présentant une température de transition qui se trouve égale à ou au-dessus de la température de vaporisation du gaz liquide et la température de l'agent tampon (9) est maintenue à la température de transition par régulation des parties du courant de gaz liquide (3) et du fluide de transfert de chaleur (10)conduites à l'agent tampon.

2. Procédé selon la revendication 1, caractérisé en ce que la température de transition de l'agent tampon (9) se trouve aux environs de la température ambiante.

3. Procédé selon la revendication 2, caractérisé en ce que l'on utilise, en tant qu'agent de transfert de chaleur, l'air à l'échappement d'une installation de climatisation.

4. Procédé selon la revendication 1 ou 2, caractérisé en ce que l'on utilise, en tant qu'agent de transfert de chaleur, un agent refroidissant liquide chargé de chaleur perdue.

5. Procédé selon l'une quelconque des revendications 1 à 4, caractérisé en ce que l'autre partie du fluide de transfert de chaleur, qui n'est pas conduite à l'agent tampon, est conduite à un circuit de refroidissement (20, 22).

6. Dispositif pour la mise en oeuvre du procédé selon l'une quelconque des revendications 1 à 5, avec un réservoir de stockage (1) d'un volume de gaz dans sa phase liquide, une conduite (2) du gaz liquide reliant le côté entrée (3) d'un évaporateur se trouvant en échange de chaleur avec l'air environnant au réservoir de stockage et une sortie agencée côté sortie (5) de l'évaporateur pour la phase gazeuse en une quantité souhaitée, caractérisé en ce qu'en dérivation à la conduite de gaz liquide (2), un premier circuit (8) d'un échangeur de chaleur est raccordé par un premier système de soupape de régulation (6,7) dont le second circuit (10),se trouvant en échange de chaleur avec le premier circuit (8) par un agent tampon (11) présentant un changement de phase à ou au-dessus de la température de vaporisation du gaz liquide, est raccordé par un second système de soupape de régulation (14, 15, 17), à un circuit (13, 19) d'un fluide de transfert de chaleur d'un procédé (12) livrant de la chaleur perdue et en ce qu'un système de régulation est prévu,commandant le premier et le second système de soupape de régulation (6,7 ; 14, 15, 17) permettant de régler la température de l'agent tampon (11) à sa température de transition.

7. Dispositif selon la revendication 6, caractérisé en ce que le second système de soupape de régulation (14, 15, 17) présente des raccordements pour un circuit générateur de froid (20, 22) où est emmagasinée l'autre partie du fluide de transfert de chaleur qui n'a pas été introduite dans l'échangeur de chaleur (9).

8. Dispositif selon la revendication 6 ou 7, caractérisé en ce que l'échangeur de chaleur (9) présente un tube (23) conduisant au premier circuit et une enveloppe externe entourant le tube à une distance radiale, balayée à son côté radialement externe par l'autre circuit, ainsi l'espace délimité entre le tube (23) et l'enveloppe externe (24) est rempli de l'agent tampon (11).
